# EUROPÄISCHE PATENTSCHRIFT

(11) **EP 0 673 824 B1**
(45) Veröffentlichungstag und Bekanntmachung des Hinweises auf die Patenterteilung: **04.06.1997**
(21) Anmeldenummer: 94105341.5
(22) Anmeldetag: 07.04.1994
(51) Int. Cl.: B62B 5/04, A61G 5/10

(54) **Feststellbremse für einen Rollstuhl**
Parking brake for a wheelchair
Frein de stationnement pour un fauteuil roulant

(30) Priorität: 25.03.1994 DE 9405091 U
(43) Veröffentlichungstag der Anmeldung: 27.09.1995
(73) Patentinhaber: Otto Bock Orthopädische Industrie Besitz- und Verwaltungs-Kommanditgesellschaft, 37115 Duderstadt (DE)
(72) Erfinder: Schillo, Stefan, D-74889 Sinsheim 12 (DE); Pfisterer, Gerhard, D-68789 St. Leon-Rot 1 (DE); Schiefer, Waldemar, D-69126 Heidelberg (DE)
(74) Vertreter: Gramm, Werner, Prof., Dipl.-Ing.

(56) Entgegenhaltungen:
- US-A- 4 570 756

## Beschreibung

Die Erfindung betrifft eine Feststellbremse für einen Rollstuhl, mit einem schwenkbar an einem Halteteil angelenkten Andrückelement, das durch Verschwenkung eines ebenfalls an dem Halteteil gelagerten Handbremshebels in eine Feststell-Position verschwenkbar ist, in der das Andrückelement an einem Rollstuhlrad bzw. seiner Bereifung unter Druck anliegt.

Eine derartige Ausführungsform läßt sich der US-A-4,570,756 entnehmen. Hier ist das den Handbremshebel sowie das Andrückelement tragende Halteteil unmittelbar am Rollstuhlrahmen über eine Bolzenklemmverbindung starr befestigt. Durch Lösen des Klemmbolzens läßt sich die gesamte Feststellbremse demontieren.

Der Erfindung liegt die Aufgabe zugrunde, durch kontruktive Umgestaltung den Einsatzbereich der eingangs beschriebenen Feststellbremse für Rollstühle zu erweitern.

Diese Aufgabe wird gemäß der Erfindung dadurch gelöst, daß das Halteteil schwenkbar an einem Adapter hängt, der Befestigungsmittel zu seiner Festlegung am Rollstuhlrahmen sowie eine bei montiertem Adapter in Rollstuhllängsrichtung liegende Schwenkachse aufweist, um die das Halteteil aus einer die Bremsfunktionsstellung definierenden formschlüssigen Raststellung in eine innerhalb der Rollstuhl-Außenkontur liegende Ruhestellung verschwenkbar ist.

Im Behindertensport werden in der Regel Sportrollstühle verwendet, die sich von Alltagsrollstühlen dadurch unterscheiden, daß sie eine starre Rahmenkonstruktion aufweisen und keine Feststellbremse besitzen, da diese beim Mannschaftssport eine Verletzungsgefahr für Mitspieler darstellt. Vielfach besteht jedoch der Wunsch, den Sportrollstuhl wegen seiner Stabilität auch im Alltagsbereich einzusetzen. Diesem Wunsch wird durch die erfindungsgemäß gestaltete Feststellbremse entsprochen, die beim Sport mit einem Handgriff nach innen eingeschwenkt werden kann und somit eine Verletzungsgefahr ausschließt.

Einen weiteren Einsatzbereich bietet die erfindungsgemäß abschwenkbare Feststellbremse in der Kombination mit sogenannten Transitrollen. Die Gänge in einem Flugzeug oder Zug sind ebenso wie auch Türen zu WC oder Bad häufig so eng, daß die Gesamtbreite des Rollstuhls ein Durchfahren nicht erlaubt. Bei Verwendung von eingesteckten Transitrollen können die Antriebsräder abgenommen werden, wodurch die Gesamtbreite des Rollstuhls wesentlich verringert wird. Der äußerste, über die Seitenkontur des Rollstuhls hinausragende Punkt wird dann durch das bolzenförmig ausgebildete Andrückelement der Feststellbremse gebildet. Bei Verwendung der erfindungsgemäß abschwenkbaren Feststellbremse läßt sich die Gesamtbreite des Rollstuhls nochmals reduzieren; zugleich wird die Gefahr des Hängenbleibens an Flugzeug- oder Zugsitzen bzw. an einem Türrahmen vermindert.

Um eine sichere Arretierung der Feststellbremse in ihrer eingeschwenkten Position zu gewährleisten, ist erfindungsgemäß eine zweite, die Ruhestellung definierende formschlüssige Raststellung vorgesehen. Zur Erzielung einer funktionssicheren und praktisch wartungsfreien Konstruktion ist es vorteilhaft, wenn das Halteteil in Richtung seiner Schwenkachse gegen die Wirkung eines das Halteteil mit seinem Rastelement in den Formschluß ziehenden federelastischen Elementes axial in eine den Formschluß aufhebende verschwenkbare Position verschiebbar ist. Hierbei ist es ferner vorteilhaft, wenn das federelastische Element eine Druckfeder ist, die auf die Schwenkachse aufgeschoben ist und sich mit ihrem einen Ende an einem Schenkel des Halteteils und mit ihrem anderen Ende an einer Schulter des Adapters abstützt.

Die Feststellbremse ist vorzugsweise als Kniehebelbremse ausgebildet, deren Totpunkt in der Bremsendstellung des Handbremshebels liegt.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung dargestellt. Es zeigen:
- **Figur 1 -**: in schematischer Darstellung in Seitenansicht einen Rollstuhl mit einer an ihm montierten Feststellbremse;
- **Figur 2 -**: in einer Explosionsdarstellung die Feststellbremse gemäß Figur 1;
- **Figur 3 -**: in Stirnansicht die Feststellbremse in ausgezogenen Linien in ihrer Funktionsstellung gemäß Figur 1, in strichpunktierter Darstellung in um ein 140° eingeschwenkter Position und in gestrichelter Darstellung in um 180° eingeschwenkter Position;
- **Figur 4 -**: einen Querschnitt durch zwei verschwenkbar miteinander verbundene Bauteile der Feststellbremse und
- **Figur 5 -**: in schaubildlicher Darstellung das eine der beiden in Figur 4 dargestellten Bauteile.

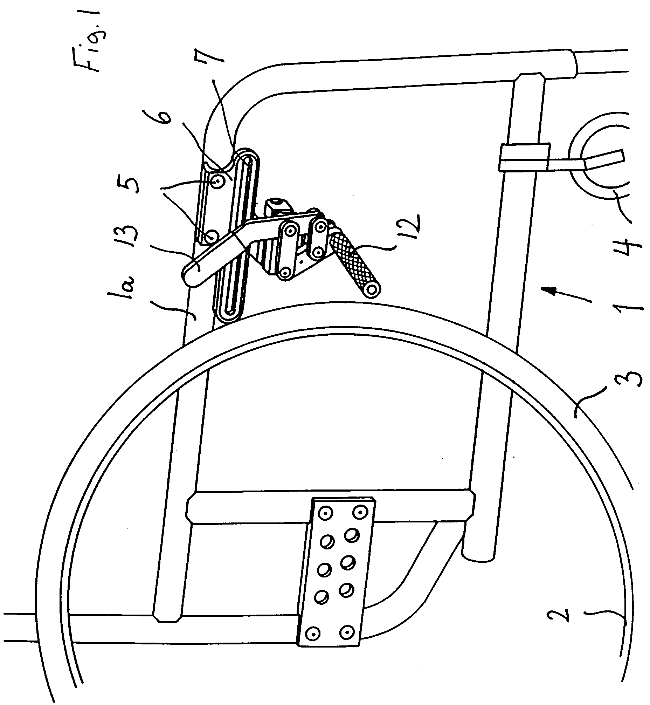

Figur 1 zeigt in stark schematisierter Darstellung die Seitenansicht eines Rollstuhls, von dem ein Rollstuhlrahmen 1, ein großes Rollstuhlrad 2 mit Bereifung 3 und ein kleineres Lenkrad 4 dargestellt sind.

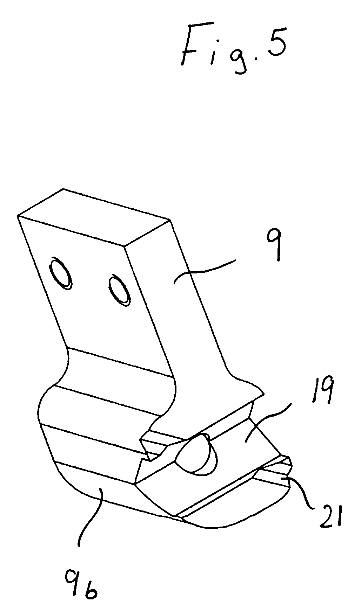

An einem oberen Rohr des Rollstuhlrahmens 1 ist eine als Kniehebelbremse ausgebildete Feststellbremse befestigt. Hierfür ist an dem Rahmenrohr 1a mit Hilfe zweier Schrauben 5 ein Montageteil 6 verschraubt, das einen in Rollstuhllängsrichtung verlaufenden Justierschlitz 7 aufweist, der von zwei Schrauben 8 durchgriffen ist, die zur Befestigung eines Adapters 9 dienen, der in Figur 5 als Einzelteil dargestellt ist.

An dem Adapter 9 ist ein Halteteil 10 schwenkbar gelagert, an dem ein Hebel 11 angelenkt ist, der an seinem unteren Ende ein Andrückelement 12 trägt, das durch Verschwenkung eines Handbremshebels 13 in eine Feststell-Position verschwenkbar ist, in der das Andrückelement 12 an dem Rollstuhlrad 2 bzw. seiner Bereifung 3 unter Druck anliegt.

Während die Verschwenkung des Hebels 11 um eine quer zum Rollstuhl angeordnete Achse erfolgt, liegt die Schwenkachse 14, um die das Halteteil 10 gegenüber dem Adapter 9 verschwenkbar ist, bei montierter Feststellbremse in Rollstuhllängsrichtung und dabei vorzugsweise parallel zu dem vorstehend genannten Justierschlitz 7.

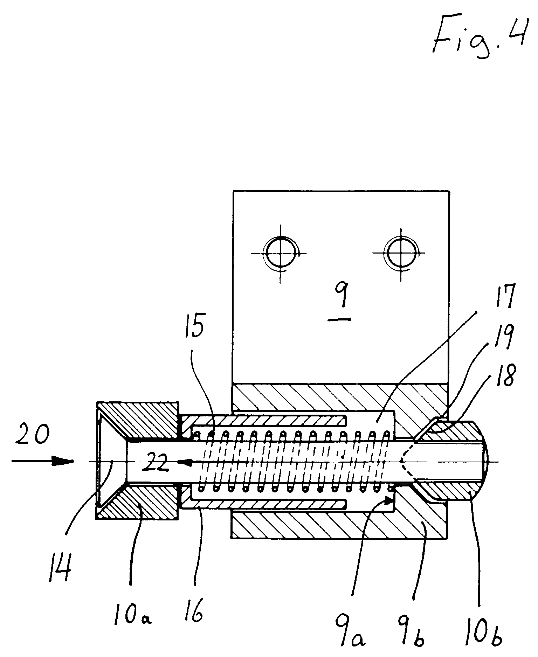

Die Schwenkachse 14 ist vorzugsweise als Schraube ausgebildet und an den beiden U-Schenkeln 10a, 10b des in Draufsicht etwa U-förmig ausgebildeten Halteteils 10 befestigt. Auf die Schwenkachse 14 ist eine Druckfeder 15 geschoben, die sich mit ihrem einen Ende an einem Schenkel 10a des Halteteils 10 und mit ihrem anderen Schenkel an einer Schulter 9a des Adapters 9 abstützt. Figur 4 läßt erkennen, daß die Druckfeder 15 von einer hülsenförmigen Buchse 16 übergriffen ist, die in eine entsprechende Ausnehmung 17 des unteren, angenähert horizontal verlaufenden Schenkels 9b des winkelförmig ausgebildeten Adapters 9 axial verschiebbar eintaucht. Aufgrund dieser Ausbildung ist das Halteteil 10 in Richtung seiner Schwenkachse 14 gegen die Wirkung der Druckfeder 15 axial verschiebbar in eine eine formschlüssige Raststellung aufhebende verschwenkbare Position.

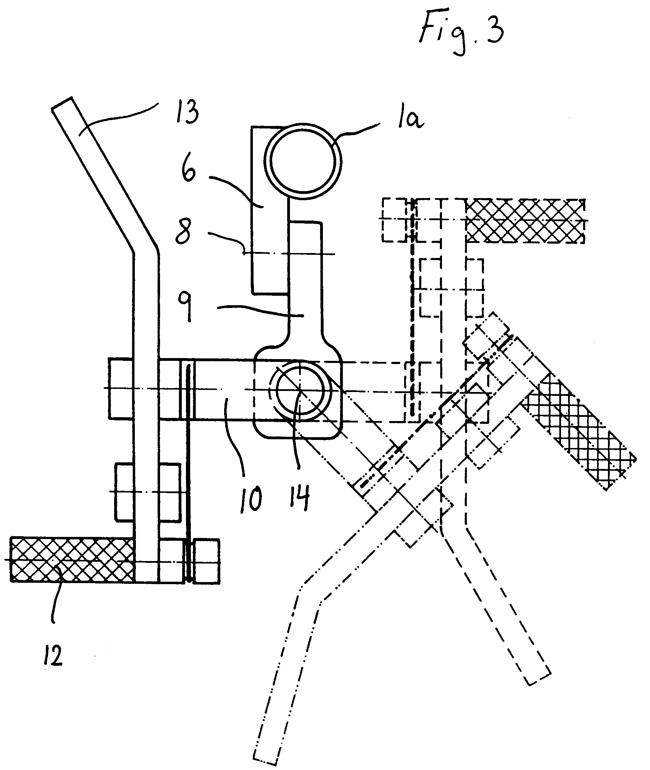

Die in Figur 1 dargestellte Bremsfunktionsstellung des Halteteils 10 (die auch in Figur 3 in Stirnansicht in ausgezogenen Linien dargestellt ist) wird durch eine erste formschlüssige Rast definiert, die durch eine am Halteteil 10 vorgesehene, im Querschnitt keilförmige Rastnase 18 und eine dieser Kontur angepaßte, im unteren Schenkel 9b des Adapters 9 vorgesehene keilförmige Nut 19 definiert ist. In der in Figur 4 dargestellten formschlüssigen Raststellung zieht die Druckfeder 15 das Halteteil 10 mit seiner Rastnase 18 in die Nut 19 des Adapters. Insbesondere Figur 4 macht auch deutlich, daß durch eine in Richtung des Pfeils 20 auf das Halteteil 10 aufgebrachte Druckkraft das Halteteil 10 axial verschoben und dadurch aus seiner formschlüssigen Raststellung befreit wird. Das Halteteil 10 wird durch die Axialverschiebung in eine verschwenkbare Position verschoben, aus der es um die Schwenkachse 14 in eine innerhalb der Rollstuhl-Außenkontur liegende Ruhestellung verschwenkbar ist. Gemäß Figur 3 sind zwei Verschwenkpositionen vorgesehen: Die zu innerst liegende Verschwenkposition wird nach einem Einschwenkwinkel von etwa 180° erreicht und ist ebenfalls definiert durch eine formschlüssige Raststellung, die ebenfalls durch die vorstehend genannte, im unteren Schenkel 9b des Adapters 9 vorgesehene Nut 19 definiert ist, in die die Rastnase 18 nach Verschwenkung um 180° erneut eingreift. Figur 3 zeigt in strichpunktierter Darstellung für das Halteteil 10 eine mittlere Verschwenkstellung, die nach einem Einschwenkwinkel von ca. 140° erreicht wird. In dieser Verschwenkstellung ist die eingeschwenkte Feststellbremse im wesentlichen nur kraftschlüssig, allenfalls durch einen geringen, leicht zu überwindenden Formschluß gehalten, damit die Feststellbremse ohne nennenswerten Druck auf das Halteteil 10 schnell wieder in ihre funktionsbereite Stellung zurückgeschwenkt werden kann. Für den erwähnten geringen Formschluß kann im unteren Schenkel 9b des Adapters 9 für die Rastnase 18 eine zweite Nut 21 vorgesehen sein, die jedoch gegenüber der ersten Nut 19 eine erheblich geringere Tiefe aufweist.

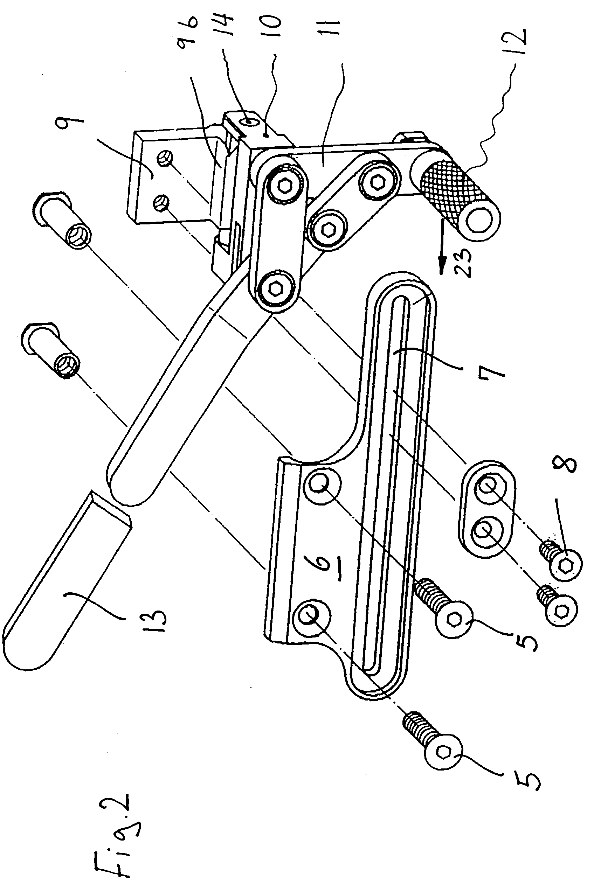

Figur 2 zeigt die Feststellbremse bzw. ihren Handbremshebel 13 in Bremsstellung, in der also das Andrückelement 12 an dem in Figur 1 dargestellten Rollstuhlrad 2 bzw. seiner Bereifung 3 unter Druck anliegt. Um sicherzustellen, daß dieser Bremsdruck nicht etwa den die Bremse bzw. ihr Halteteil 10 in der Funktionsstellung fixierenden Formschluß gegenüber dem Adapter 9 aufzuheben vermag, ist die Konstruktion so ausgelegt, daß der Wirkungsvektor 22 der Druckfeder 15 in die gleiche Richtung weist wie der Kraftvektor 23 der in Bremsstellung am Andrückelement 12 angreifenden Reaktionskraft (siehe Figuren 2 und 4).

Durch die erfindungsgemäße Gestaltung ist die Möglichkeit gegeben, die Feststellbremse an jedem handelsüblichen Rollstuhl zu montieren.

## Patentansprüche

1. Feststellbremse für einen Rollstuhl, mit einem schwenkbar an einem Halteteil (10) angelenkten Andrückelement (12), das durch Verschwenkung eines ebenfalls an dem Halteteil (10) gelagerten Handbremshebels (13) in eine Feststell-Position verschwenkbar ist, in der das Andrückelement (12) an einem Rollstuhlrad (2) bzw. seiner Bereifung (3) unter Druck anliegt, **dadurch gekennzeichnet**, daß das Halteteil (10) schwenkbar an einem Adapter (9) hängt, der Befestigungsmittel (5,6) zu seiner Festlegung am Rollstuhlrahmen (1) sowie eine bei montiertem Adapter (9) in Rollstuhllängsrichtung liegende Schwenkachse (14) aufweist, um die das Halteteil (10) aus einer die Bremsfunktionsstellung definierenden formschlüssigen Raststellung in eine innerhalb der Rollstuhl-Außenkontur liegende Ruhestellung verschwenkbar ist.

2. Feststellbremse nach Anspruch 1, **gekennzeichnet durch** eine zweite, die Ruhestellung definierende formschlüssige Raststellung.

3. Feststellbremse nach Anspruch 2, **dadurch gekennzeichnet**, daß die beiden Raststellungen um einen Verschwenkwinkel von ca. 180° gegeneinander versetzt sind.

4. Feststellbremse nach Anspruch 2 oder 3, **gekennzeichnet durch** eine zwischen den beiden formschlüssigen Raststellungen bei einem Einschwenkwinkel von ca. 140° angeordnete, im wesentlichen kraftschlüssige Raststellung.

5. Feststellbremse nach einem der vorhergehenden Ansprüche, **dadurch gekennzeichnet**, daß das Halteteil (10) in Richtung seiner Schwenkachse (14) gegen die Wirkung eines das Halteteil (10) mit seinem Rastelement (18) in den Formschluß (18,19) ziehenden federelastischen Elementes axial in eine den Formschluß (18,19) aufhebende verschwenkbare Position verschiebbar ist.

6. Feststellbremse nach einem der vorhergehenden Ansprüche, **dadurch gekennzeichnet**, daß die formschlüssige Rast gebildet ist durch eine im Querschnitt keilförmige Rastnase (18), die in eine konturangepaßte keilförmige Nut (19) eintaucht.

7. Feststellbremse nach Anspruch 5 oder 6, **dadurch gekennzeichnet**, daß das federelastische Element eine Druckfeder (15) ist, die auf die Schwenkachse (14) aufgeschoben ist und sich mit ihrem einen Ende an einem Schenkel (10a) des Halteteils (10) und mit ihrem anderen Ende an einer Schulter (9a) des Adapters (9) abstützt.

8. Feststellbremse nach einem der vorhergehenden Ansprüche, **dadurch gekennzeichnet**, daß das Halteteil (10) in Draufsicht etwa U-förmig ausgebildet ist, und daß die als Schraube ausgebildete Schwenkachse (14) an den beiden U-Schenkeln (10a,10b) befestigt ist.

9. Feststellbremse nach einem der vorhergehenden Ansprüche, **gekennzeichnet durch** eine Ausbildung als Kniehebelbremse.

10. Feststellbremse nach einem der Ansprüche 5 bis 9, **dadurch gekennzeichnet**, daß der Wirkungsvektor (22) des federelastischen Elementes in die gleiche Richtung weist wie der Kraftvektor (23) der in Bremsstellung am Andrückelement (12) angreifenden Reaktionskraft.

## Claims

1. Immobilising brake for a wheel chair with a press-on element (12) joined in articulated manner to a holding part (10) so as to be capable of swivel motion, it being possible, by swivelling a hand-brake lever (13) likewise mounted on said holding part (10), to swivel said press-on element to an immobilising position in which said press-on element is applied subject to pressure to a wheel (2) of said wheel chair or to the tyre (3) of said wheel, **characterised** in that the holding part (10) is suspended in a manner capable of swivel motion from an adapter (9) comprising securing means (5, 6) for attaching said adapter to the wheelchair frame (1) as well as a swivel spindle (14) extending in the longitudinal direction of the wheel chair when the adapter (9) is mounted, it being possible for the holding part (10) to be swivelled about said swivel spindle from a positive engagement position defining the functional position of the brake to a non-active position within the outer contour of the wheel chair.

2. Immobilising brake according to Claim 1, **characterised** by a second positive engagement position defining the non-active position.

3. Immobilising brake according to Claim 2, **characterised** in that the two engagement positions are offset in respect of one another by a swivel angle of about 180°.

4. Immobilising brake according to Claim 2 or 3, **characterised** by a substantially non-positive engagement position provided at an inward swivel angle of about 140° between the two positive engagement positions.

5. Immobilising brake according to one of the preceding claims, **characterised** in that the holding part (10) can be shifted axially in the direction of its swivel spindle (14), in opposition to the force exerted by a resilient spring element pulling the holding part (10) with its engaging element (18) towards the positively locked position (18, 19), to a position permitting swivel motion in which the positively locked position is disengaged.

6. Immobilising brake according to one of the preceding claims, **characterised** in that the positive engaging element is constituted by an engaging lug (18) of wedge-shaped cross-section, said lug entering a wedge-shaped groove (19) of corresponding shape.

7. Immobilising brake according to Claim 5 or 6, **characterised** in that the resilient element is a compression spring (15) which is slid onto the swivel spindle (14), one of the ends of said element being supported by a leg (10a) of the holding part (10) whereas its other end is supported by a shoulder (9a) of the adapter (9).

8. Immobilising brake according to one of the preceding claims, **characterised** in that viewed from above the holding part (10) is approximately U-shaped and in that the swivel spindle (14) which is designed as a screw is secured to the two legs of the U (10a, 10b).

9. Immobilising brake according to one of the preceding claims, **characterised** by being designed as a toggle joint brake.

10. Immobilising brake according to one of Claims 5 to 9, **characterised** in that the action vector (22) of the resilient spring element extends in the same direction as the force vector (23) of the reaction force applied in the braking position to the press-on element (12).

## Revendications

1. Frein de stationnement pour un fauteuil roulant, avec un élément-presseur (12) ariculé de manière pivotable sur une partie de soutien (10), orientable dans une position de stationnement par pivotement d'un levier de frein à main (13) également supporté par la partie de soutien (10), dans laquelle l'élément-presseur (12) se place sous pression contre une roue du fauteuil roulant (2) ou contre son bandage (3), caractérisé en ce que la partie de soutien (10) est suspendue de manière pivotable sur un adaptateur (9), qui présente des moyens de fixation (5, 6) pour assurer sa fixation au cadre (1) du fauteuil roulant, ainsi qu'un axe de pivotement (14) disposé suivant la direction longitudinale du fauteuil roulant lorsque l'adaptateur (9) est monté, et autour duquel la partie de soutien (10) peut être pivotée à partir d'une position d'encliquetage par correspondance de forme définissant la position de fonctionnement du frein, vers une position de repos située à l'intérieur du contour externe du fauteuil roulant.

2. Frein de stationnement selon la revendication 1, caractérisé par une deuxième postion d'encliquetage par correspondance de forme désfinissant la position de repos.

3. Frein de stationnement selon la revendication 2, caractérisé en ce que les deux positions d'encliquetage sont décaleées l'une par rapport à l'autre d'un angle de pivotement d'environ 180°.

4. Frein de stationnement selon la revendication 2 ou 3, caractérisé par une position d'encliquetage obtenue essentiellement sous l'action d'un force, située entre les deux positions d'encliquetage obtenues par correspondance de forme, à un angle de pivotement vers l'intérieur d'environ 140°.

5. Frein de stationnement selon l'une quelconque des revendications précédentes, caractérisé en ce que la partie de soutien (10) peut être déplacée axialement suivant la direction de son axe de pivotement (14) en une position pivotante supprimant la fermeture par correspondance de forme (18, 19), en opposition à l'action d'un élément élastique à ressort tirant la partie de soutien (10) par son élément d'encliquetage (18) dans la correspondance de forme (18, 19).

6. Frein de stationnement selon l'une quelconque des revendications précédentes, caractérisé en ce que l'encliquetage par correspondance de forme est formé par un bec d'encliquetage (18) dont la section transversale est en biseau, qui s'enfonce dans une rainure (19) en biseau au contour adapté.

7. Frein de stationnement selon la revendication 5 ou 6, caractérisé en ce que l'élément élastique à ressort est un ressort de compression (15) qui est glissé sur l'axe de pivotement (14) et s'appuie à l'une de ses extrémités sur une aile (10a) de la partie de soutien (10) et à son autre extrémité sur un épaulement (9a) de l'adaptateur (9).

8. Frein de stationnement selon l'une quelconque des revendications précédentes, caractérisé en ce que, vue en plan, la partie de soutien (10) est configurée sensiblement sous forme de U, et en ce que l'axe de pivotement (14) configuré en tant que vis est fixé aux deux ailes du U (10a, 10b).

9. Frein de stationnement selon l'une quelconque des revendications précédentes, caractérisé par une configuration sous forme de frein à genouillère.

10. Frein de stationnement selon l'une quelconque des revendications 5 à 9, caractérisé en ce que le vecteur d'action (22) de l'élément à ressort élastique est dirigé dans la même direction que le vecteur de force (23) de la force de réaction agissant sur l'élément de poussée (12) en position de freinage.
